# EUROPÄISCHE PATENTSCHRIFT

(11) **EP 2 117 860 B1**
(45) Veröffentlichungstag und Bekanntmachung des Hinweises auf die Patenterteilung: **25.04.2012**
(21) Anmeldenummer: 08700974.2
(22) Anmeldetag: 03.01.2008
(51) Int. Cl.: B60H 1/34

(54) **LUFTAUSSTRÖMER, INSBESONDERE FÜR EIN KRAFTFAHRZEUG**
AIR OUTLET, PARTICULARLY FOR A MOTOR VEHICLE
AÉRATEUR, NOTAMMENT POUR UN VÉHICULE AUTOMOBILE

(30) Priorität: 08.01.2007 DE 102007001986
(43) Veröffentlichungstag der Anmeldung: 18.11.2009
(73) Patentinhaber: Behr GmbH & Co. KG, 70469 Stuttgart (DE)
(72) Erfinder: BENAMIRA, Salah, 70180 Stuttgart (DE); FEITH, Thomas, 70825 Korntal-Münchingen (DE); KLINGLER, Dietrich, 73540 Heubach (DE)
(74) Vertreter: Grauel, Andreas
(86) Internationale Anmeldenummer: PCT/EP2008/000017
(87) Internationale Veröffentlichungsnummer: WO 2008/083929

(56) Entgegenhaltungen:
- WO-A-2004/029427
- DE-A1-102004 038 016
- DE-A1-102005 017 919

## Beschreibung

Die Erfindung betrifft einen Luftausströmer, insbesondere für ein Kraftfahrzeug.

Im modernen Fahrzeugbau werden die Mittel zur Belüftung und Klimatisierung des Innenraums zunehmend aufwendiger. Insbesondere ist es gewünscht, die Luft zumindest wahlweise so zu verteilen, dass kein gerichteter und von den Insassen als störend empfundener Luftzug entsteht. Ferner ist es gewünscht, Luft auch gezielt in hinteren oder seitlichen Fahrzeugbereichen oder auch Dachbereichen ausströmen zu lassen, um eine verteilte und gegebenenfalls selektierbare Belüftung zu erreichen.

Aus der DE 10 2004 038 016 A1 ist ein Luftausströmer zur Innenbelüftung von Räumen, wie Fahrgasträumen von Straßen- oder Schienenfahrzeugen, bekannt, der in einem ersten Betriebsfall einen gerichteten, strahlförmigen Luftaustritt ("Spotförmiger Luftaustritt") mit großer Eindringtiefe und in einem zweiten Betriebsfall einen diffusen Luftaustritt mit möglichst weit aufgefächertem Luftstrahl sowie beliebige, stetig zwischen diesen beiden Betriebsfällen einstellbare Mischbetriebsfälle ermöglicht, so dass sowohl eine schnelle Durchmischung der Raumluft als auch eine gleichmäßige, zugluftfreie Belüftung möglich ist. Der gerichtete, strahlförmige Luftaustritt wird mit einer möglichst turbulenzarmen, gleichförmig gerichteten Rohrströmung, der diffuse Luftaustritt hingegen mittels Impulstransport in normaler Richtung zur Strahlachse durch verstärkte Turbulenz und/oder Drall unter Zuhilfenahme von Luftleitblechen erreicht. Beim genannten Luftausströmer werden diese Strömungen in getrennten Luftkanälen für die unterschiedlichen Betriebsfälte geführt. Um jeweils einen von zwei zueinander parallel liegenden zylinderförmigen Teilkanäle ist dabei ein weiterer Teilkanal konzentrisch angeordnet, wobei die Luftströmung in den äußeren Teilkanälen jeweils durch Leiteinrichtungen mit Drall beaufschlagt wird; während die Luftströmung in den inneren Kanälen direkt austritt. Die Luftströme der einzelnen Teilkanäle sind dabei unabhängig voneinander steuerbar. Die genannte Bauform bedingt einen Luftaustritt aus zwei nebeneinander liegenden kreisrunden Austrittsflächen, die zusammen eine vergleichsweise große Fläche einnehmen und somit viel Bauraum benötigen.

Bei Fahrzeugen, in denen dieser Luftausströmer aus Platzgründen nicht in Frage kommt, könnte dieser entsprechend skaliert werden, was jedoch zu höheren Strömungsgeschwindigkeiten und damit Druckabfall und akustischen Problemen führt.

Aus der DE 10 2005 017 919 A1 ist eine kompakte Vorrichtung zur Belüftung eines Fahrzeugs bekannt, bei welcher durch eine Anordnung der Austrittsfläche in im Wesentlichen paralleler Orientierung zu dem geführten Luftstrom eine besonders flache Bauweise ermöglicht ist und bei welcher dennoch ein mit einem Drall versehener und daher diffus austretender Luftstrom realisierbar ist. Eine gerichtete Luftausströmung ist bei dieser Vorrichtung nicht möglich. Bei dieser Vorrichtung kann zwar durch das Vorhandensein eines gewölbten Kreisrings als Austrittskammer die Luft am Austritt aufplatzen und diffus ausstrahlen. Nachteilig ist aber, dass die ausströmende Luft nur in einem bestimmten Kreissegment austritt, so dass das Aufplatzen des Luftstrahls ungleichmäßig erfolgt. Zudem weist die Vorrichtung nur eine kleine Eintrittsfläche auf, wodurch ein hoher luftseitiger Druckabfall, der zu einer Geräuschentwicklung führen kann, bedingt ist.

Aus der WO 2004/029427 ist ein Luftausströmer nach allen Merkmalen des Oberbegriffs des Anspruchs 1 bekannt.

Der Erfindung liegt daher die Aufgabe zugrunde, einen alternativen Luftausströmer mit einem geringeren Druckabfall auch bei kleiner Baugröße zur Verfügung zu stellen.

Diese Aufgabe wird erfindungsgemäß gelöst durch einen Luftausströmer mit den Merkmalen des Anspruchs 1.

Vorteilhafte Ausgestaltungen der Erfindung sind Gegenstand der Unteransprüche.

Der erfindungsgemäße Luftausströmer umfasst mindestens zwei Luftzuführungskanäle, die in eine Austrittskammer münden, welche eine kreis- oder kreisringförmige Wandung aufweist, wobei ein erster Luftzuführungskanal exzentrisch bezüglich der Austrittskammer angeordnet ist, so dass die von diesem ersten Luftzuführungskanal zuführbare Luft zunächst tangential einströmbar und anschließend kreis- oder spiralförmig entlang der Wandung der Austrittskammer führbar ist. Hierbei wird eine strömungsgünstige diffuse Ausströmung der Luft in einem gewünschten Bereich erzielt. Der Aufbau dieses Luftausströmers ist einfach und damit kostengünstig und weist hinsichtlich verschiedener Strömungsarten und Betriebsfällen eine hohe Flexibilität auf.

In einer möglichen Ausführungsform ist ein zweiter Luftzuführungskanal zentrisch bezüglich der Austrittskammer angeordnet, wobei das Ende dieses zweiten Luftzuführungskanals axial in die Austrittskammer mündet, so dass die von diesem zweiten Luftzuführungskanal zuführbare Luft axial aus einer zentralen Austrittsöffnung der Austrittskammer ausströmbar ist. In diesem Fall tritt die ausströmende Luft praktisch geradlinig und gerichtet aus (Betriebsfall "spotförmiger Luftaustritt").

Zur Erzielung eines diffusen Luftaustritts ist die äußere Wandung der Austrittskammer vorzugsweise in Form einer Helix ausgebildet. Durch die helixförmige Ausführung der äußeren Wandung der Austrittskammer wird die gewünschte Rotation des im ersten exzentrisch angeordneten Luftzuführungskanal führbaren Luftstroms und somit ein strömungsausgangsseitiges Aufplatzen im Betriebsfall "diffuser Luftaustritt" am besten erreicht.

Erfinchungegemäβ ist der zweite Luftzuführungskanal des Luftausströmers exzentrisch bezüglich der Austrittskammer angeordnet, so dass die von diesem zweiten Luftzuführungskanal zuführbare Luft zunächst tangential einströmbar und anschließend kreis- oder spiralförmig entlang der Wandung der Austrittskammer führbar ist, wobei das Ende des zweiten Luftzuführungskanals zum Ende des ersten Luftführungskanals derart versetzt in die Austrittskammer münden, dass deren Luftausströmungen gegenläufig rotierbar sind. Dabei münden die Enden der beiden Luftzuführungskanäle bevorzugt um 180° versetzt zueinander in die Austrittskammer, so dass die Einströmung der Luft jeweils in einem Halbkreis erfolgt. Zweckmäßigerweise münden die Enden des ersten und zweiten Luftzuführungskanals in axialer Richtung der Austrittskammer zueinander höhenversetzt in diese Austrittskammer. Hierzu ist die Austrittskammer beispielsweise aus zwei übereinander angeordneten Kreisen oder Kreisringen gebildet. Dabei ist die äußere Wandung der Austrittskammer bevorzugt in Form einer Doppelhelix ausgebildet. Durch ein derartiges halbseitiges Einströmen der Luft in den jeweils zugehörigen Kreis bzw. Kreisring und daraus resultierend einem gegenüberliegenden Strömungsaustritt sowie durch die helixförmige Ausgestaltung der Wandung erhält die tangential in die beiden Kreise oder Kreisringe einströmbare Luft eine Rotation entlang der jeweiligen helixförmigen Wandung. Die beiden getrennt geführten Luftströmungen platzen am Luftaustritt auf und der jeweils austretende Luftstrahl weitet sich auf, so dass aufgrund der versetzten Anordnung der Luftaustritte ein gleichmäßiges Aufplatzen der austretenden Luftströmung für den Betriebsfall "diffuser Luftaustritt" erreicht ist. Der luftseitige Druckabfall und die Strömungsgeräusche werden durch die doppelte Anströmungsfläche und gegebenenfalls einen zentralen Spotaustritt minimiert. Beispielsweise kann bei einer kreisringförmigen Ausbildung zentral eine kleine Spotöffnung und somit ein axialer Luftausströmungsbereich gebildet sein.

Je nach Vorgabe und Form der gewünschten Drallerzeugung kann die äußere Wandung der Austrittskammer in ihrem axialen Verlauf entsprechend geformt ausgebildet sein. In einer bevorzugten Ausführungsform ist die äußere Wandung zur Unterstützung der Drallerzeugung verschiedenartig gewölbt ausgeführt. In einer alternativen Ausführungsform verläuft die äußere Wandung in ihrem axialen Verlauf eben und somit im Wesentlichen gerade. Bedingt durch die helixförmige Ausgestaltung der Austrittskammer weist die Wandung eine zu- bzw. abnehmende Wandungshöhe entlang des Außenumfangs auf. In einer weiteren alternativen Ausführungsform kann die äußere Wandung sich in ihrem axialen Verlauf konisch aufweiten, wodurch ein verbessertes Aufplatzen des strömungsausgangsseitig austretenden Luftstroms erreicht wird.

Zur Einstellung einer Ausströmrichtung bzw. zum Öffnen oder Verschließen der Austrittsöffnung der Austrittskammer kann diese strömungsausgangsseitig mit einer die Austrittsöffnung vollständig oder teilweise überdeckenden Abdeckblende versehen sein. Je nach Ausführungsform der Abdeckblende kann diese manuell oder elektrisch ansteuerbar sein. Vorzugsweise ist die Abdeckblende drehbar. Hierbei kann die Abdeckblende beispielsweise mit einem zentral angeordneten Drehknopf versehen sein. In einer weiteren Ausführungsform kann die Abdeckblende mit einer Verschlussklappe versehen sein, mittels welcher zumindest einer der Luftzuführungskanäle verschließbar ist. Durch Drehen der Abdeckblende kann dabei zumindest einer der Luftführungskanäle durch die Verschlussklappe vollständig oder teilweise verschlossen werden. Darüber hinaus ist die Abdeckblende mit der Verschlussklappe bevorzugt derart gestaltet, dass einer der Luftführungskanäle derart verschlossen werden kann, dass ein Mischbetriebsfall zwischen "spotförmigem Luftaustritt" und "diffusem Luftaustritt" erreicht wird. Um den Komfort zu verbessern, kann die Abdeckblende mit beweglichen und/oder starren Lamellen als Verschlussklappen zum Öffnen und/oder Schließen bzw. zur Ausrichtung des austretenden Luftstroms versehen sein. Auch kann die Abdeckblende mit ringförmigen Streben versehen sein. Die Abdeckblende ist vorzugsweise auf die Austrittskanimer aufsteckbar. Auch kann diese in Art eines Deckels mit der Austrittskammer verbunden oder zusammengesetzt sein.

Bevorzugt sind die Luftzuführungskanäle und die Austrittskammer aus Kunststoff und/oder Metall gebildet. Insbesondere kann ein Luftausströmer nur aus wenigen Kunststoffteilen bestehen, wobei auch die Fertigung aus nur einem einzigen Kunststoffteil in einem Spritzgussverfahren möglich ist. Vorzugsweise wird der erfindungsgemäße Luftausströmer in besonders engen Bauräumen, z. B. im Bereich einer seitlichen Dachsäule, eines Dachhimmels, an einem Passagier- oder Fahrersitz, in einem hinteren Innenraumbereich und/oder im Bereich einer Instrumententafel eines Fahrzeugs, eingesetzt. Aufgrund seiner einfachen, raumsparenden und kostengünstigen Bauweise sowie der Flexibilität der Luftausströmung hinsichtlich Strömungsart und -richtung ist der erfindungsgemäße Luftausströmer für diese Fahrzeuganordnungen besonders geeignet. Die Oberfläche der Austrittskammer bzw. der Abdeckblende im Ausströmungsbereich wird entsprechend den Designvorgaben des Fahrzeugherstellers gestaltet, beispielsweise kreisförmig.

Im Folgenden wird ein Ausführungsbeispiel der Erfindung anhand einer Zeichnung näher erläutert.

Dabei zeigen:
- Fig. 1: eine perspektivische Ansicht eines Luftausströmers mit mindestens zwei Luftzuführungskanäle, die beide exzentrisch in eine Austrittskammer münden,
- Fig. 2: den Luftausströmer gemäß Figur 1 in Draufsicht,
- Fig. 3: einen Querschnitt durch den Luftausströmer gemäß Figur 2,
- Fig. 4: eine alternative Ausführungsform eines Luftausströmers mit einem exzentrisch und einem zentrisch in die Austrittskammer mündenden Luftzuführungskanal in Draufsicht,
- Fig. 5: den Luftausströmer gemäß Figur 4 in Seitenansicht,
- Fig. 6: einen Querschnitt durch den Luftausströmer gemäß Figur 4 im Bereich der beiden Luftzuführungskanäle,
- Fig. 7: eine alternative Ausführungsform für einen Luftausströmer mit einer strömungsausgangsseitig aufgesetzten Abdeckblende in Seitenansicht, und
- Fig. 8 bis 12: verschiedene Ausführungsformen der äußeren Wandung der Austrittskammer.

Einander entsprechende Teile sind in allen Figuren mit den gleichen Bezugszeichen versehen.

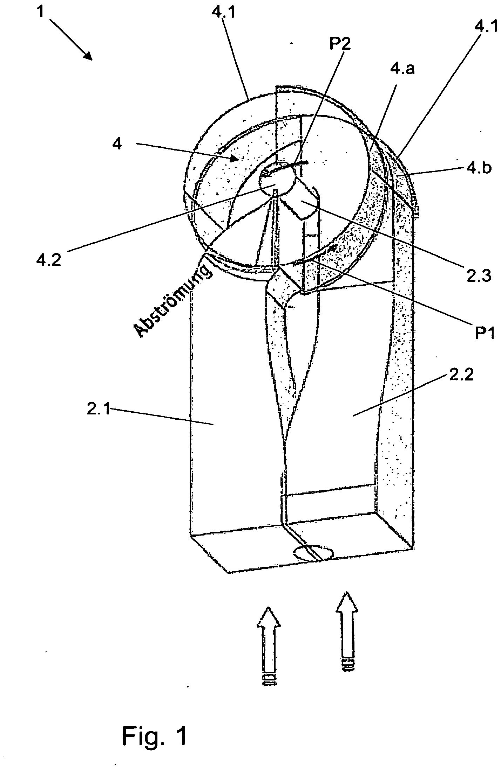

Figur 1 zeigt eine perspektivische Ansicht einer bevorzugten Ausführungsform für einen Luftausströmer 1 mit einem ersten und einem Luftzuführungskanal 2.1 bzw. 2.2, die beide exzentrisch in eine Austrittskammer 4 münden. Dabei ist die von diesen Luftzuführungskanälen 2.1 und 2.2 zuführbare Luft jeweils zunächst tangential einströmbar und anschließend kreis- oder spiralförmig entlang einer kreisförmigen Wandung 4.1 der Austrittskammer 4 führbar ist. Das Ende des zweiten Luftzuführungskanals 2.2 mündet zum Ende des ersten Luftführungskanals 2.2 derart versetzt zueinander, insbesondere um 180° versetzt zueinander in die Austrittskammer 4, dass die aus den Enden austretenden Luftausströmungen gegenläufig rotierbar sind, wie durch die Pfeile P1 und P2 gezeigt. Durch die 180° versetzt zueinander ausgeführte Einströmung ist die Luft jeweils in einem Halbkreis einström- und führbar. Darüber hinaus münden die Enden des ersten und zweiten Luftzuführungskanals 2.1 und 2.2 in axialer Richtung der Austrittskammer 4 zueinander höhenversetzt in diese. Hierzu ist die Austrittskammer 4 beispielsweise aus zwei übereinander angeordneten Kreisringen 4.a und 4.b gebildet. Dabei ist die jeweilige äußere Wandung 4.1 der Kreisringe 4.a und 4.b in Form einer Helix ausgeführt, so dass die Austrittskammer 4 die Form einer Doppelhelix aufweist. Durch eine derartige Ausgestaltung der Austrittskammer 4 erhält die an der äußeren Wandung 4.1 vorbeiströmende Luft einen tangentialen Impuls und rotiert damit selbst in den Kreisringen 4.a und 4.b. Der entstehende Luftwirbel platzt am Luftaustritt auf und der austretende Luftstrahl weitet sich auf (Betriebsfall "diffuser Luftaustritt").

Durch die kreisringförmige Ausbildung der Austrittskammer 4 ist darüber hinaus zentrisch ein weiterer Luftzuführungskanal 2.3 angeordnet, dessen Ende axial in die Austrittskammer 4 mündet, so dass die von diesem weiteren Luftzuführungskanal 2.3 zuführbare Luft axial aus einer zentralen Austrittsöffnung 4.2 der Austrittskammer 4 ausströmbar ist. In diesem Fall tritt die Luft quasi geradlinig aus (Betriebsfall "spotförmiger Luftaustritt"). Alternativ zu einer kreisringförmigen Ausgestaltung der Austrittskammer 4 kann diese in nicht näher dargestellter Ausführung aus übereinander angeordneten Kreisen gebildet sein, wobei in diesem Ausführungsbeispiel der zentrisch angeordnete Luftzuführungskanal 2.3 entfällt.

Im gezeigten Ausführungsbeispiel weisen die Luftzuführungskanäle 2.1 und 2.2 im Querschnitt eine Rechteckform und der Luftzuführungskanal 2.2 eine Kreisform auf. Die Luftzuführungskanäle 2.1 bis 2.4 können je nach Vorgabe eine beliebige Querschnittsform aufweisen, insbesondere ist diese an die Gegebenheiten im Fahrzeug angepasst.

Darüber hinaus ist der Luftausströmer 1 beispielsweise aus dünnen Kunststoffteile oder Metallbleche gebildet. Dabei kann der Luftausströmer 1 als ein Einzelteil oder mehrteilig ausgebildet sein.

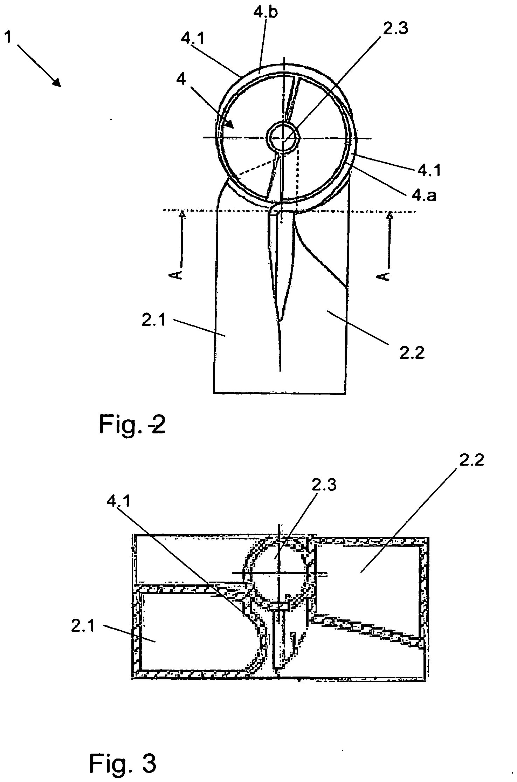

Figur 2 zeigt den Luftausströmer 1 gemäß Figur 1 in Draufsicht. In Figur 3 ist ein Querschnitt A-A durch den Luftausströmer 1 gemäß Figur 2 gezeigt. Hierbei sind die verschiedenen Querschnittsformen der Luftzuführungskanäle 2.1 bis 2.3 ersichtlich. Dabei weist der Luftzuführungskanal 2.1 im in die Austrittskammer 4 mündenden Eintrittsbereich eine gewölbte Wandung auf, die anschließend die äußere Wandung 4.1 des Kreisrings 4.a bildet. Der zweite Luftzuführungskanal 2.2 ist in diesem Kanalbereich noch rechteckförmig ausgeführt und weist analog zum ersten Luftzuführungskanal 2.1 im Eintrittsbereich der Austrittskammer 4 eine gewölbte Wandung auf, die anschließend die äußere Wandung 4.1 des Kreisrings 4.b bildet (siehe Figur 2). Der Querschnitt des dritten Luftzuführungskanals 2.3 für einen spotförmigen Luftaustritt ist im Wesentlichen kreisförmig.

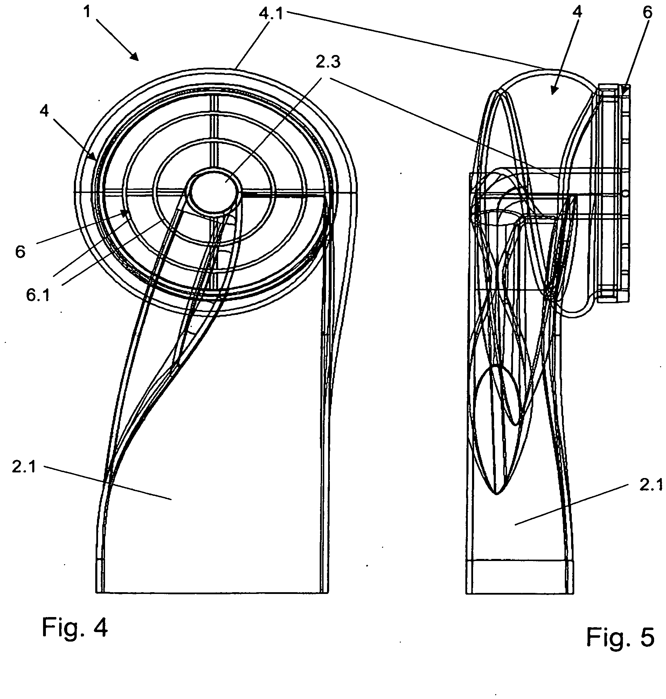

Figur 4 zeigt eine alternative Ausführungsform eines Luftausströmers 1 mit einem ersten, exzentrisch in die Austrittskammer 4 mündenden Luftzuführungskanal 2.1 und einem zweiten, zentrisch in die Austrittskammer 4 mündenden Luftzuführungskanal 2.3 in Draufsicht. In Figur 5 ist der Luftausströmer 1 gemäß Figur 4 in Seitenansicht dargestellt. Analog zum Luftausströmer 1 gemäß den Figuren 1 bis 3 ist die äußere Wandung 4.1 der Austrittskammer 4 helixförmig ausgestaltet. Hierdurch wird die aus dem ersten Luftzuführungskanal 2.1 ausströmbare Luft entlang der Wandung 4.1 in einen Drall versetzt, so dass die strömungsausgangsseitig aus der Austrittskammer 4 ausströmende Luft aufplatzt ("diffuser Luftaustritt"). Die durch den zentrisch angeordneten Luftzuführungskanal 2.3 führbare Luft tritt hingegen axial in die Austrittskammer 4 aus und ist weitgehend gleichförmig und gerichtet ("spotförmiger Luftaustritt").

Zusätzlich kann die Austrittskammer 4 mit einer Abdeckblende 6 zur Einstellung einer Strömungsrichtung bzw. zum Öffnen und Verschließen der Austrittsöffnung zumindest einer der Luftzuführungskanäle 2.1 und 2.3 versehen sein. Hierzu weist die Abdeckblende 6 beispielsweise kreisförmige Streben 6.1 auf.

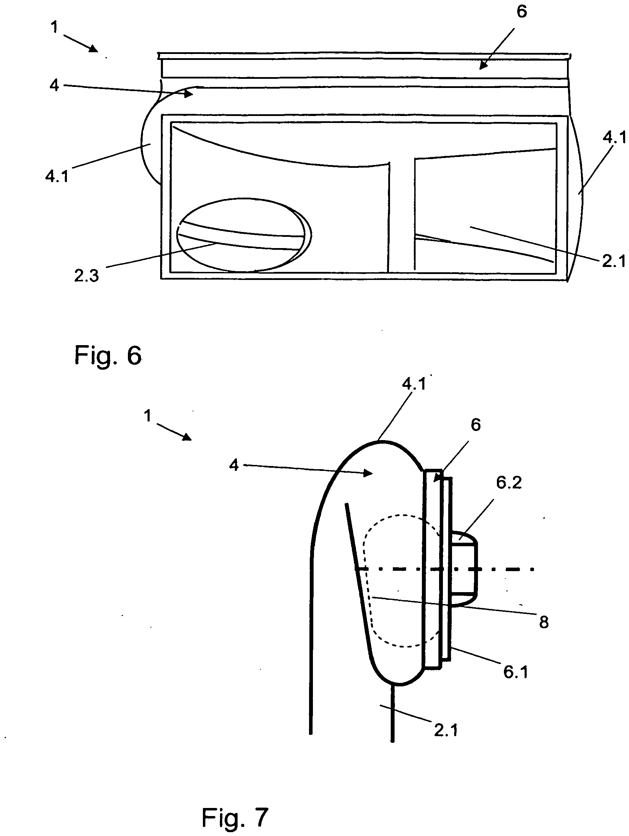

Figur 6 zeigt einen Querschnitt durch den Luftausströmer 1 gemäß Figur 4 im Bereich der beiden Luftzuführungskanäle 2.1 und 2.3. Dabei sind die verschiedenen Querschnittsformen der Luftzuführungskanäle 2.1 und 2.3 sowie die Wölbung der äußeren 4.1 der Austrittskammer 4 ersichtlich.

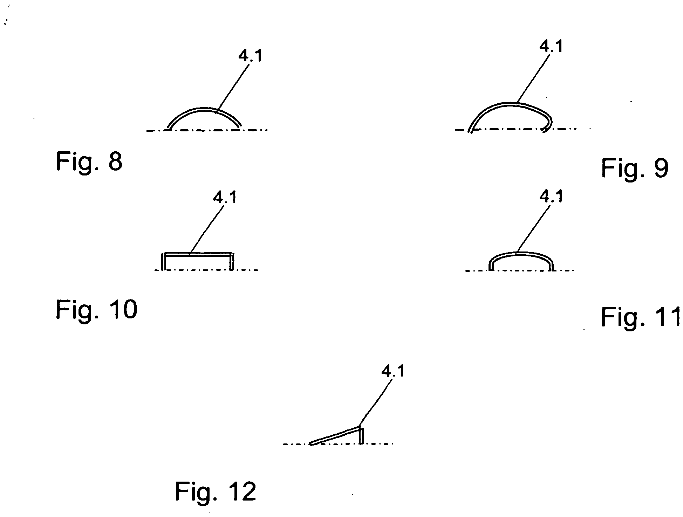

In Figur 7 ist eine alternative Ausführungsform für einen Luftausströmer 1 mit einer strömungsausgangsseitig aufgesetzten Abdeckblende 6 in Seitenansicht gezeigt. Dabei ist die Abdeckblende 6 drehbar ausgeführt. Hierzu weist die Abdeckblende 6 beispielsweise ein zentrisch angeordnetes Bedienelement 6.2, z. B. einen Drehknopf auf. Zusätzlich kann die Abdeckblende 6 mit einer Verschlussklappe 8 versehen sein, die durch Drehen der Abdeckblende 6 zumindest einen der Luftzuführungskanäle 2.1 bzw. 2.2 bzw. 2.3 vollständig oder teilweise verschließt bzw. öffnet. Hierdurch können Mischbetriebsfälle zwischen spotförmigem und diffusem Luftaustritt einstellbar sein. Zur Erzielung einer möglichst gleichmäßigen diffusen Luftausströmung weist die äußere Wandung 4.1 der Austrittskammer 4 eine entsprechende Form auf. In den Figuren 8 bis 12 sind verschiedene Ausführungsformen der äußeren Wandung 4.1 dargestellt.

## Patentansprüche

1. Luftausströmer (1), insbesondere für ein Kraftfahrzeug, umfassend mindestens zwei Luftzufühiungskanäte (2.1 bis 2.3), die in eine Austrittskammer (4) münden, weiche eine kreis- oder kreisringförmige Wandung (4.1) aufweiset, wobei ein erster Luftzuführungskanal (2.1) exzentrisch bezüglich der Austrittskammer (4) angeordnet ist, so dass die von diesem ersten Luftzuführungskanal (2.1) zuführbare Luft zunächst tangential einströmbar und anschließend kreis- oder spiralförmig entlang der Wandung (4.1) der Austrittskammer(4) führbar ist, **dadurch gekennzeichnet, dass** ein zweiter Luftzuführungskanal (2.2) exzentrisch bezüglich der Austrittskammer (4) angeordnet ist, so das die von diesem zweiten Luftzuführungskanal (2.2) zuführbare Luft zunächst tangential einströmbar und anschließen kreis- oder spiralförmig entlang der Wandung (4.1) der Austrittskammer (4) führbar ist, wobei das Ende des zweiten Luftzuführungskanals (2.2) zum Ende des ersten Luftführungskanals (2.1) derart versetzt in die Austrittskammer. (4) mündet, dass deren Luftausströmungen gleichläufig rotierbar sind.

2. Luflausströmer nach Anspruch 1, wobei ein zweiter Luftzuführungskanal (2.3) zentrisch bezüglich der Austrittskammer (4) angeordnet ist und das Ende dieses zweiten Luftzuführungskanals (2.3) axial in die Austrittskammer (4) mündet, so dass die von diesem zweiten Luftzuführungskanal (2.3) zuführbare Luft axial aus einer zentralen Austrittsöffnung (4.2) der Austrittskammer (4) ausströmbar ist.

3. Luftausströmer nach Anspruch 2, wobei die äußere Wandung (4.1) der Austrittskammer (4) in Form einer Helix ausgebildet ist.

4. Luftausströmer nach Anspruch 1, wobei die Enden des ersten und zweiten Luftzuführungskanals (2.1, 2.2) in axialer Richtung der Austrittskammer (4) zueinander höhenversetzt in diese Austrittskammer (4) münden.

5. Luftausströmer nach Anspruch 4, wobei die äußere Wandung (4.1) der Austrittskammer (4) in Form einer Doppelhelix ausgebildet ist.

6. Luftausströmer nach einem der Ansprüche 1 bis 5, wobei die äußere Wandung (4,1) der Austrittskammer (4) in ihrem axialen Verlauf gewölbt ist.

7. Luftausströmer nach einem der Ansprüche 1 bis 5, wobei die äußere Wandung (4.1) in ihrem axialen Verlauf eben ausgeführt ist.

8. Luftausströmer nach einem der Ansprüche 1 bis 5, wobei sich die äußere Wandung (4.1) in ihrem axialen Verlauf konisch aufweitet.

9. Luftausströmer nach einem der vorhergehenden Ansprüche, wobei die Austrittskammer (4) strömungsausgangsseitig mit einer Abdeckblende (6) versehen ist.

10. Luftausströmer nach Anspruch 9, wobei die Abdeckblende (6) drehbar ist.

11. Luftausströmer nach Anspruch 9 oder 10, wobei die Abdeckende (6) mit einer Verschlussklappe (8) versehen ist, mittels weicher zumindest einer der Luftzuführungskanäle (2.1 bis 2.3) verschließbar ist.

12. Luftausströmer (L) nach einem der Ansprüche 9 bis 11, wobei die Abdeckblende (6) mit beweglichen und/oder starren Lamellen zur Ausrichtung des austretenden Luftstroms und/oder mit ringförmigen Streben (6.1) versehen ist.

13. Luftausströmer nach einem der vorhergehenden Ansprüche, wobei die Luftzuführungskanäle (2.1 bis 2.3) und die Austrittskammer (4) aus Kunststoff und/oder Metall gebildet sind.

14. Verwerdung eines Luftausströmers (1) nach einem der Ansprüche 1 bis 13 zur Anordnung im Bereich einer seitlichen Dachsäule und/oder einer Instrumententafel eines Fahrzeugs.

## Claims

1. An air outlet (1), particularly for a motor vehicle, comprising at least two air supply ducts (2.1 to 2.3) leaning into a discharge chamber (4) which has a circular or circular ring-shaped well (4.1), a first air supply duct (2.1) being arranged eccentrically with respect to the discharge chamber (4) so that the air that can be supplied by this first air supply duct (2.1) can first flow in tangentially and subsequently be guided in a circular or helical manner alone the wall (4.1) of the discharge chamber (4), **characterised in that** a second air supply duct (2.2) is arranges eccentrically with respect to the discharge chamber (4) so that the air that can be supplied by this second air supply duct (2.2) can first flow in tangentially and then be guided in a circular or helical manner alone the well (4.1) of the discharge chamber (4), wherein the end of the second air supply duct (2.2) leads into the discharge chamber (4) with offset in relation to the end of the first pair supply duct (2.1) such that the air outflows can be rotated in the sane direction.

2. The air outlet according to claims 1, wherein a second air supply duct (2.3) is arrange centrically with respect to the discharge chamber (4) and the end of this second air supply duct (2.3) leads axially into the discharge chamber (4) so that the air that can be supplied by this second air supply duct (2.3) can flow axially out of a central discharge pening (4.2) of the discharge chamber (4).

3. The air outlet according to claim 2, wherein the outer wall (4.1) or the discharge chamber (4) is designed in the shape of a helix.

4. The air outlet according to claim 1, wherein the ends of the first and second air supply ducts (2.1, 2.2) lead into this discharge chamber (4) offset from each other in terms of the weights thereof in the axial direction of the discharge camber (4).

5. The air outlet according to claim 4, wherein the outer wall (4.1) of the discharge chamber (4) is designed in the shape of a double helix.

6. An air outlet according to any one of claims 1 to 5, wherein the axial course of the outer wall (4.1) of the discharge chamber (4) is curved.

7. An air outlet according to any one of claims 1 to 5, wherein the axial course of the outer wall (4.1) is flat.

8. An air outlet according to any one of claims 1 to 5, wherein the axial course of the outer wall (4.1) is conically widened.

9. An air outlet according two one of the preceding Claims, wherein the discharge chamber (4) is provided with a cover plate (6) of the flow exit side.

10. The air outlet according to claim 9, wherein the cover plate (6) can be rotated.

11. The air outlet according two claim 9 or 10, wherein the cover plate (6) is provides with a closure cap (8), by meons of which at least one of the air supply ducts (2.1 to 2.3) can be closet.

12. Ain air outlet (L) according to one of claims 9 to 11, wherein the cover plate (6) is provided with movable and/or rigid lovers for orienting the exiting air flow and/or with annular ribs (6.1).

13. An air outlet according to one of the preceding claims, wherein the air supply ducts (2.1 to 2.3) and the discharge chamber (4) are produced from plastic material and/or metal.

14. Use of an air outlet (1) according to one of claims 1 to 13 for arrangement in the region of a literal roof pillar and/or a dashboard of a vehicle.

## Revendications

1. Diffuseur d'air (1), en particulier pour une véhicule automobile, comprenant au moins deux conduits d'alimentation d'air (2.1 à 2.3) qui débauchent dans une chambre de sortie (4) qui présente une paroi (4.1) de forme circulaire ou en forme d'anneau circulaire, où un premier conduit d'alimentation d'air (2.1) est disposé de façon excentrée par rapport à la chambre de sortie (4), de sorte que l'air pouvant être fourni par ce premier conduit d'alimentation d'air (2.1) peut entrer d'abord de façon tangentielle et, ensuite, être dirigé de façon circulaire ou en forme de spirale, le long de la paroi (4.1) de la chambre de sortie (4),
**caractérisé en ce qu'**un deuxième conduit d'alimentation d'air (2.2) est disposé de façon excentrée par rapport à la chambre de sortie (4), de sorte que l'air pouvant être fourni par ce deuxième conduit d'alimentation d'air (2.2) peut entrer d'abord de façon tangentielle et, ensuite, peut être dirigé de façon circulaire ou en forme de spirale, le long de la paroi (4.1) de la chambre de sortie (4), où l'extrémité du deuxième conduit d'alimentation d'air (2.2) débouche dans la chambre de sortie (4) en étant détalée par rapport à l'extrémité du premier conduit d'alimentation d'air (2.1), de manière telle que les flux d'air sortant de la chambre de sortie circulent en pouvant tourneur dans la même direction.

2. Diffuseur d'air selon la revendication 1, où un deuxième conduit d'alimentation d'air (2.3) est disposé de façon centrée par rapport à la chambre de sortie (4), et l'extrémité de ce deuxième conduits d'alimentation d'air (2.3) débouche axialement dans la chambre de sortie (4), de sorte que l'air pouvant être fourni par ce deuxième conduit d'alimentation d'air (2.3) circule axialement, en pouvant s'écouler par une ouverture de sortie centrals (4.2) de la chambre de sortie (4).

3. Diffuseur d'air selon la revendications 2, où la paroi extérieure (4.1) de la chambre de sortie (4) est configurée en ayant la forme d'une hélice.

4. Diffuseur d'air selon la revendication 1, où les extrémité du premier et deuxième conduit d'alimentation d'air (2.1, 2.2), suivant la direction axiale de la chambre de sortie (4), débouclent dans cette chambre de sortie (4), en étant décalées en hauteur l'une par rapport à l'autre.

5. Diffuseur d'air selon la revendications 4, où la paroi extérieure (4.1) de la chambre de sortie (4) est configurée en ayant la forme d'une double hélice.

6. Diffuseur d'air selon l'une quelconque des revendications 1 à 5, où la paroi extérieure (4.1) de la chambre de sortie (4) est bombée dans son profil axial.

7. Diffuseur d'air selon l'une quelconque des revendications 1 à 5, où la paroi extérieure (4.1) est configurée de façon plane dans son profil axial.

8. Diffuseur d'air selon l'une quelconque des revendications 1 à 5, où la paroi extérieure (4.1) s'élargit de façon clonique dans son profil axial.

9. Diffuseur d'air selon l'une quelconque des revendications précédente, où la chambre de sortie (4) est dotée d'un cache de protection (6), côté sortie d'écoulement.

10. Diffuseur d'air selon la revendication 9, où le cache de protection (6) est rotatif.

11. Diffuseur d'air selon la revendication 9 ou 10, où le cache de protection (6) est doté d'un volet de fermeture (8) au moyen, auquel au moins l'un des conduits d'alimentation d'air (2.1 à 2.3) peut être fermé.

12. Diffuseur d'air (1) selon l'une quelconque des revendications 9 à 11, où le cache de protection (6) est doté de lamellés mobile et / ou fixes servant à l'orientation du flux d'air sortant et / ou doté de renforts (6.1) de forme annulaire.

13. Diffuseur d'air selon l'une quelconque des revendication précédentes, où les conduits d'alimentation d'air (2.1 à 2.3) et la chambre de sortie (4) sont réalisés en matière plastique et / ou en métal.

14. Utilisation d'un diffuseur d'air (1) selon l'une quelconque des revendications 1 à 13, diffuseur d'air dont l'agencement est prévu dans la zone d'un montant de toit latéral et / ou d'un tableau de bord d'un véhicule.
